**Europäisches Patentamt**

**European Patent Office**

**Office européen des brevets**

(19)

(11) Numéro de publication: **0 193 466 B1**

# FASCICULE DE BREVET EUROPEEN

(12)

(45) Date de publication du fascicule du brevet:
30.03.88

(21) Numéro de dépôt: **86400398.3**

(22) Date de dépôt: **25.02.86**

(51) Int. Cl.⁴: **F 02 D 11/10,** B 60 K 26/04,
B 60 K 31/04

(54) Dispositif d'actionnement électrique du papillon d'un moteur à combustion interne.

(30) Priorité: **25.02.85 FR 8502670**

(43) Date de publication de la demande:
**03.09.86 Bulletin 86/36**

(45) Mention de la délivrance du brevet:
**30.03.88 Bulletin 88/13**

(84) Etats contractants désignés:
**AT BE CH DE GB IT LI**

(56) Documents cités:
**DE - A - 3 143 666**
**DE - A - 3 237 672**
**US - A - 3 527 118**

**"EUROTRANS 2"** Springer Verlag Berlin/Heidelberg p. 146

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Lombard, Claude, 60, rue Corneille,**
**F-78150 Le Chesnay (FR)**
Inventeur: **Brisset, Jean-Paul, 3 bis, Square du Gasselet,**
**F-94320 Thiais (FR)**
Inventeur: **Marais, Jean-Luc, 26, rue Philippe Triaire,**
**F-92000 Nanterre (FR)**
Inventeur: **Catier, Gérard, 26, rue Emile Duployé,**
**F-92130 Issy Les Moulineaux (FR)**

(74) Mandataire: **Réal, Jacques et al, Régie Nationale des**
**Usines Renault SCE 0804, F-92109 Boulogne Billancourt**
**Cedex (FR)**

## Description

La présente invention s'applique à un dispositif d'actionnement électrique du papillon d'un moteur à combustion interne, notamment d'un véhicule automobile, comprenant: un réducteur à engrenages interposé entre un moteur électrique et un bras de commande, un levier de commande d'un papillon, des moyens de rappel de ce levier de commande vers une position de ralenti du papillon, ainsi qu'un contacteur électrique permettant de détecter si le bras de commande contrôle effectivement le levier de commande ou si celui-ci est placé sous le contrôle direct du conducteur du véhicule agissant mécaniquement sur une pédale d'accélérateur (DE-A-3.143.666).

De tels dispositifs, associés à un système électronique de régulation, sont connus notamment pour assurer la commande automatique du papillon des gaz d'un carburateur ou d'un organe de réglage équivalent tel que le levier de pompe d'injection pour les véhicules à cycle Diesel, tout en conservant la commande mécanique usuelle à partir de la pédale d'accélérateur, de manière à permettre d'une part au conducteur d'autoriser la commande automatique de la vitesse du véhicule, par exemple par un système de vitesse imposée (VI) respectant les limitations de vitesse, tout en conservant à tout moment la possibilité d'accélérer manuellement le moteur pour réaliser un dépassement en survitesse par exemple, et d'autre part d'assurer la régulation du régime de ralenti du moteur à combustion interne du véhicule. Ces dispositifs connus se révèlent à la réalisation et à l'usge relativement encombrants et onéreux, au niveau du réducteur à engrenages et surtout du contacteur électrique qui joue un rôle essentiel, en indiquant au système de régulation, lorsqu'il fonctionne en régulateur de vitesse ou de ralenti, si l'organe de commande est placé ou non sous le contrôle direct du conducteur.

La présente invention vise notamment à simplifier ces deux organes et à en diminuer le coût tout en améliorant leur fiabilité et les possibilités de réglage du contacteur, de manière à réaliser un dispositif d'actionnement qui soit plus facile à loger et à relier à l'organe de commande de l'accélérateur qui comporte toujours par ailleurs une commande manuelle.

A cet effet, selon l'invention, le réducteur à engrenages comporte un train planétaire dont l'engrenage planétaire est solidaire en rotation de l'arbre du moteur électrique, dont la couronne à denture intérieure est reliée mécaniquement au bras de commande et dont les axes de support des pignons satellites sont solidaires d'un porte-satellites, tandis que le porte-satellites est monté oscillant entre deux positions et, d'une part, est sollicité élastiquement par un ressort de rappel vers une première position dans laquelle il place le contacteur électrique dans un premier état et, d'autre part, est placé dans une deuxième position dans laquelle il place le contacteur électrique dans un deuxième état, à l'encontre du ressort de rappel, sous l'action des moyens de rappel du levier de commande lorsque celui-ci est contrôlé par le bras de commande.

Selon un premier mode de réalisation, le porte-satellites constitue un levier transversal qui est articulé à rotation autour de l'axe du moteur électrique dont il est séparé par un palier intermédiaire et qui porte en des points diamétralement opposés les deux axes de support respectifs de deux satellites qui engrènent simultanément avec la denture extérieure du planétaire et avec la denture intérieure de la couronne du train planétaire et l'une des extrémités du levier est susceptible de venir en contact avec un poussoir d'actionnement du contacteur électrique sous l'effet de la rotation du levier tandis que l'autre extrémité du levier est en appui sur le ressort hélicoïdal de rappel.

Le ressort de rappel est logé au moins partiellement dans un logement ou trou borgne ménagé dans le levier et entoure un axe de butée susceptible de venir en butée sur le fond du logement ou trou borgne de manière à limiter l'angle de rotation du porte-satellites. La position de l'extrémité de butée de l'axe de butée est réglable par rapport au fond du logement ou trou borgne afin de permettre de régler la course d'actionnement du contacteur électrique.

L'extrémité du levier transversal qui est en appui sur le ressort hélicoïdal de rappel est placée avec jeu entre deux joues de butée solidaires du corps du réducteur et qui font saillie sur une face de ce corps et le ressort de rappel est en appui sur une première de ces joues et repousse une face de ce levier au contact de la deuxième joue tandis que les moyens de rappel de l'organe de commande tendent à faire pivoter le levier en direction de la première joue au contact de l'axe de butée.

Selon un autre mode de réalisation, le porte-satellites constitue un levier transversal qui est articulé à rotation autour de l'axe du moteur électrique dont il est séparé par un palier intermédiaire et qui porte en des points diamétralement opposés les deux axes de support respectifs de deux satellites qui engrènent simultanément avec la denture extérieure du planétaire et avec la denture intérieure de la couronne et un prolongement du levier transversal porte un doigt d'actionnement du contacteur électrique tandis que l'un des axes de support des satellites est en appui sur un ressort de torsion constituant le ressort de rappel et enroulé autour d'un prolongement du porte-satellites et le doigt d'actionnement est engagé avec un jeu (j) dans une lumière fermée d'une plaque de réglage dont la position est réglable par rapport au contacteur afin de positionner la course d'actionnement du poussoir de celui-ci limitée audit jeu (j). Le poussoir du contacteur d'actionnement est disposé à proximité immédiate du doigt d'actionnement de manière que le contacteur soit actionné lorsque l'organe de commande est contrôlé par l'organe électrique.

Selon une disposition avantageuse, le contacteur d'actionnement est maintenu bloqué en position par la plaque de réglage qui est elle-même bloquée par une vis de réglage.

Le moteur électrique d'actionnement du train planétaire est un moteur pas à pas qui est alimenté en courant électrique, soit en continu pour maintenir sa position, soit en impulsions pour avancer ou reculer pas à pas de manière à rendre la position du moteur en rotation indépendante du tarage des moyens de rappel de l'organe de commande de l'accélérateur et dépendante uniquement des impulsions électriques reçues et il est agencé pour que la coupure de son alimentation électrique, notamment pour placer l'organe de commande sous le seul contrôle du conducteur, supprime les couples de retenue ou de freinage d'origine électrique agissant sur ce moteur.

D'autres buts, avantages et caractéristiques apparaîtront à la lecture de la description de divers modes de réalisation de l'invention, faite à titre non limitatif et en regard du dessin annexé où:

la figure 1 est une vue en perspective d'un dispositif d'actionnement à moteur électrique selon l'invention appliqué à l'entraînement du papillon de commande des gaz d'un moteur à combustion interne de véhicule;

la figure 2a est une représentation schématique de l'étage de réduction et du contacteur électrique du dispositif selon l'invention, lorsque celui-ci est en service;

la figure 2b est une représentation schématique identique à celle de la figure 2a mais lorsque le dispositif d'actionnement est momentanément mis hors service par une reprise de contrôle manuelle du conducteur du véhicule;

la figure 3 est une vue de détail en coupe par l'axe longitudinal, de l'étage de réduction avec son bras support des satellites inclus dans le réducteur;

la figure 5 est une vue de détail en coupe selon le plan V-V représenté à la figure 3;

la figure 6 est une vue en coupe longitudinale avec arrachements d'un autre mode de réalisation de l'étage de réduction et du moteur d'entraînement avec un ressort de rappel spiral pour le porte-satellites;

la figure 7 est une vue partielle en coupe transversale avec arrachements selon le plan VII-VII de la figure 6;

la figure 8 est une vue partielle en coupe selon le plan VIII-VIII de la figure 7 faisant apparaître la plaque de réglage et le contacteur électrique.

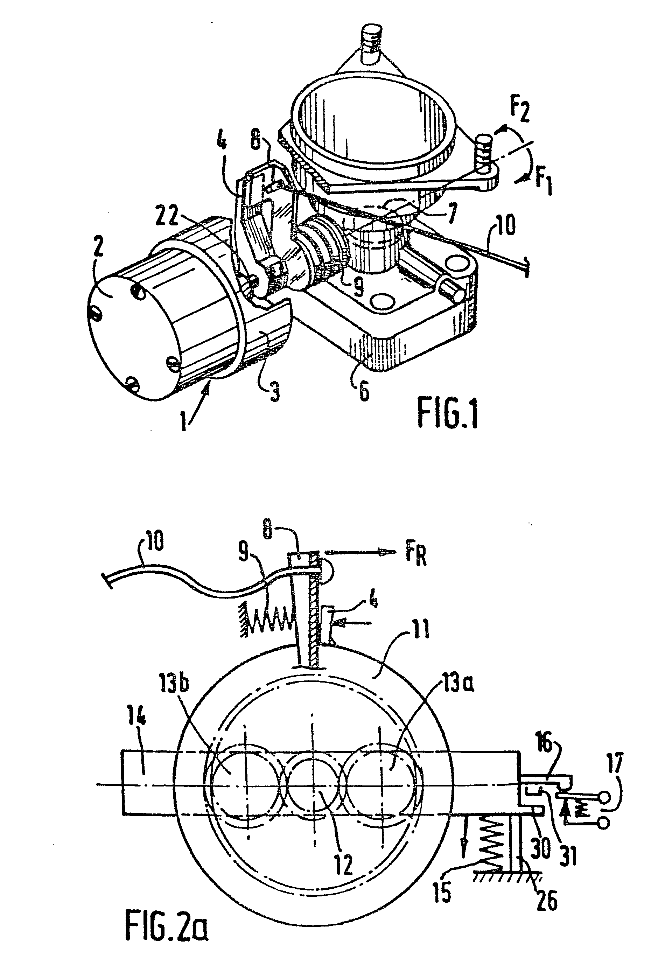

Le dispositif d'actionnement 1 représenté à la figure 1 comprend un groupe motoréducteur 1 constitué d'un moteur électrique 2, d'un ensemble réducteur 3, d'un bras de commande 4 et d'un contacteur électrique constituant l'un des objets de l'invention et permettant de détecter s'il y a contact entre le bras 4 et un levier 8 de commande d'un papillon 7 monté dans un corps de carburateur 6 et sollicité vers sa position de fermeture par un ressort 9. Le levier 8 est par ailleurs relié par un câble 10 à une pédale d'accélérateur (non représentée) permettant au conducteur du véhicule de commander le régime du moteur à combustion interne (non représenté) sur lequel est monté le corps 6.

En fonctionnement, le bras 4 dont la position est commandée par le moteur électrique 2 par l'intermédiaire de l'ensemble réducteur 3, se comporte comme une butée mécanique variable. Dans le cas où les changements de position du papillon 7 s'effectuent sous le contrôle du moteur électrique 2, ils ont lieu soit dans le sens représenté par une flèche $F_1$ par poussée du bras 4 entraîné par le moteur électrique 2 sur levier 8 à l'encontre du ressort 9, soit dans le sens d'une flèche $F_2$ sous l'action du ressort 9 sollicitant le levier 8 en appui contre le bras 4. Si les changements de position du papillon 7 sont commandés mécaniquement à partir de la position de la pédale d'accélérateur, ils ont lieu dans le sens de la flèche $F_1$ par traction du câble 10 sur le levier 8 ou dans le sens de la flèche $F_2$ sous l'action du ressort 9.

Lorsque le dispositif d'actionnement 1 est sous le contrôle d'un circuit électronique de régulation classique (non représenté) pour asservir le régime du moteur à combustion interne à une valeur de consigne visant soit à réguler la vitesse du véhicule, soit à réguler le régime de ralenti du moteur, le contacteur selon l'invention permet de détecter si le moteur à combustion interne est sous le contrôle effectif du dispositif d'actionnement 1, le bras 4 et le levier 8 étant alors en appui l'un sur l'autre, ou sous le contrôle du conducteur par l'intermédiaire de la pédale d'accélérateur et du câble 10, le bras 4 et le levier 8 étant alors écartés l'un de l'autre.

L'actionnement du contacteur a pour conséquence, lorsque le circuit électronique fonctionne en régulateur de vitesse, que le bras 4 conserve la position qu'il occupait lors d'une action temporaire sur la pédale d'accélérateur, par exemple en cas de dépassement d'un autre véhicule, et permet ainsi de revenir ensuite automatiquement sous le contrôle du dispositif d'actionnement à surveillance électronique sans intervention de la part du conducteur.

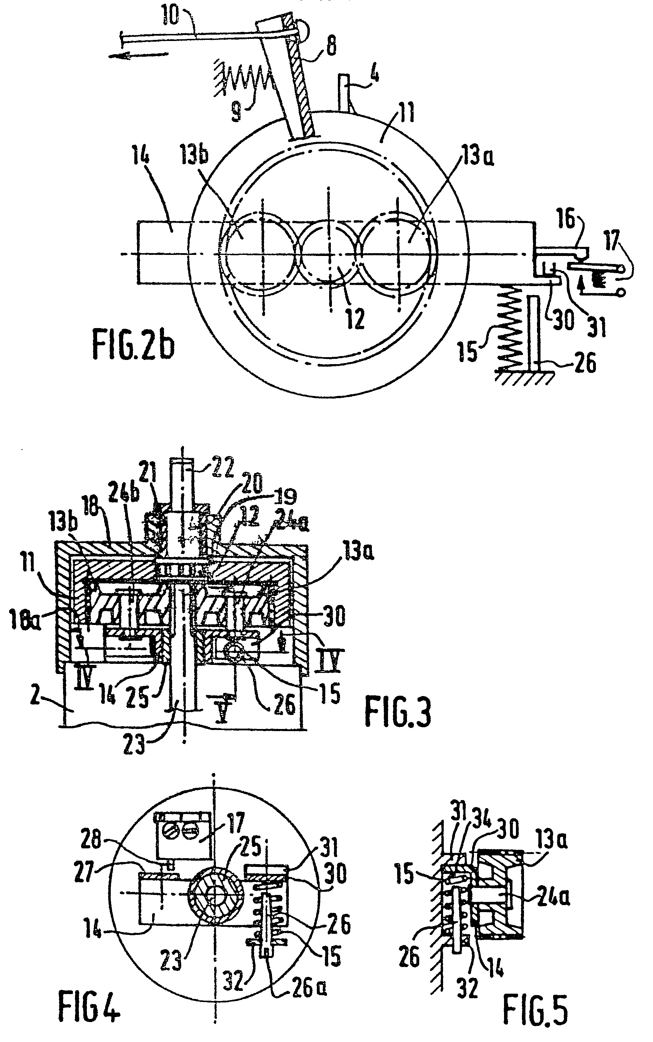

Sur la représentation schématique des figures 2a et 2b, on voit que la liaison entre d'une part une couronne à denture intérieure 11 d'un train planétaire reliée en rotation au bras 4 et, d'autre part, un planétaire 12 relié en rotation au rotor du moteur électrique de commande 2, est réalisée par deux pignons satellites 13a et 13b dont les axes de rotation (non représentés) sont solidaires d'un porte-satellites constitué par un levier transversal oscillant 14 qui est en appui sur un ressort de rappel 15. Le levier 14 présente du côté du ressort 15 un poussoir 16 susceptible d'actionner un contacteur électrique 17 et une aile 30 susceptible de venir en appui dans le sens de l'écrasement du ressort 15 sur un axe de butée 26 et du côté opposé sur une joue fixe 31.

On voit sur la figure 2a que l'action de la pédale d'accélération ne s'exerce pas sur le câble d'accélérateur 10 mais que le moteur électrique 2 agit sur le levier 8 à l'encontre du ressort 9 de fermeture du carburateur via le planétaire 12, les satellites 13a et 13b et la couronne 11 solidaire du bras 4. La réaction FR du ressort 9 tend à faire tourner le bras 14 à l'encontre du ressort de rappel 15 jusqu'à fermer le contact électrique 17 et à amener le bras 14 en butée sur l'axe de butée 26.

La figure 2b illustre le cas de la reprise en commande manuelle du conducteur alors que la commande de vitesse imposée du véhicule est toujours enclenchée ou que le système fonctionne en régulateur de régime de ralenti. L'action du ressort 9 sur le bras 4 est annulée et le couple de réaction sur le levier 14 disparaît, ce qui permet au ressort 15 de repousser le levier 14 en rotation jusqu'à amener l'aile 30 au contact de la joue 31 et d'ouvrir le contacteur électrique 17. En réponse à cette ouverture, le circuit électronique de régulation commande le maintien en position du bras 4 prêt à reprendre le contrôle de la vitesse du véhicule après la phase transitoire de contrôle manuel. Lorsque l'effet du couple résistant du ressort 9 sur le bras 4 est supprimé, cette suppression peut être repérée par le contacteur 17 soit par établissement, soit par coupure du circuit. Pour réaliser un repérage par établissement du circuit, il suffit par exemple de disposer le contacteur 17 de l'autre côté du poussoir 16.

A la figure 3 sont représentés en coupe longitudinale les éléments et organes contenus à l'intérieur du corps enveloppant 18 du réducteur de vitesse à train planétaire fixé sur le corps de carburateur 6. La couronne à denture intérieure 11, logée dans un alésage 18a du corps 18, est reliée par des cannelures 19 à un arbre de sortie 20 qui traverse un palier 21 du corps 18 et est accouplé par un embout 2 (voir également sur la figure 1), par exemple de section rectangulaire, au bras 4.

Le moteur électrique de commande 2 est représenté en vue arrachée avec son arbre de sortie 23 qui se termine par une partie sur laquelle a été taillée la denture d'engrenage formant le planétaire 12 engagée à l'intérieur du corps 18 pour engrener avec les deux pignons satellites 13a et 13b qui engrènent également avec la denture intérieure de la couronne 11.

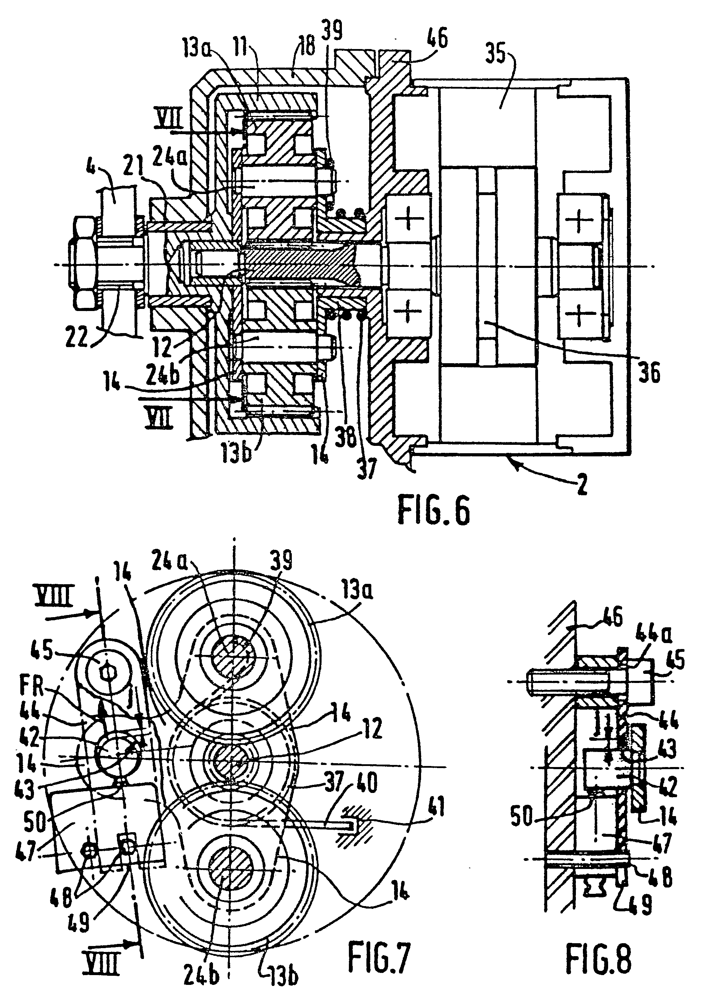

Selon l'invention, les pignons satellites 13a et 13b sont portés par des axes 24a et 24b fixés sur un porte-satellites constitué par le levier 14 articulé en rotation autour de l'axe de sortie 23 du moteur électrique dont il est séparé par un palier intermédiaire 25 constitué ici par un prolongement du palier de sortie du moteur électrique. Le ressort de rappel 15 apparaît en coupe sur la figure 3 dans la position qu'il occupe autour d'un axe 26 de guidage et de butée, cette disposition du ressort 15 correspondant ici à celle représentée en coupe sur les figures 4 et 5.

La figure 4 permet de voir le levier 14 articulé en rotation autour du palier intermédiaire 25 et dont une face d'extrémité latérale 27 est susceptible de venir en appui sur le poussoir d'actionnement 28 du contacteur électrique 17 et d'actionner ce contacteur électrique en repoussant le ressort 15. L'extrémité ou aile 30 du levier 14 qui s'appuie sur le ressort de rappel 15 est placée avec jeu entre deux joues 31 et 32 prévues sur un flasque du corps de réducteur 18 ou du moteur électrique 2. Le ressort de rappel 15 est en appui à l'une de ses extrémités sur la joue 32 et à l'autre extrémité sur l'aile 30. La joue 31 et l'extrémité adjacente de l'axe 26 constituent des butées coopérant avec l'aile 30 pour délimiter les deux positions du levier 14 correspondant respectivement à l'état ouvert et fermé du contacteur 17.

Sur la figure 5 correspondant à la figure 3, on voit qu'un logement creux 34 est formé par pliage et rabattement en L de l'aile 30 du levier 14 (voir aussi les figures 3 et 4) pour recevoir le ressort hélicoïdal 15 enroulé autour de l'axe de butée 26 qui est fixé, par exemple par vissage, sur la joue 32. Sous l'effet de la force de rappel du ressort 15, l'aile 30 est repoussée au contact de la joue 31 en l'absence de réaction sur la couronne 11. L'axe 26 de guidage du ressort 15 et de butée présente une fente de vissage 26a grâce à laquelle on peut régler sa position à l'aide d'un tournevis passé à travers un trou de réglage non représenté du corps 18.

Le mode de fonctionnement du dispositif d'actionnement de papillon de carburateur qui vient d'être décrit en correspondance aux figures 3 à 5 va maintenant être explicité. Lorsque le circuit électronique de régulation n'est pas enclenché pour contrôler automatiquement la vitesse du véhicule, ou ne fonctionne pas en régulateur de régime de ralenti, le conducteur actionne librement le levier 8 de commande du papillon 7, via le câble d'accélération 10 et, lorsqu'il relâche ce câble, le couple de rappel du ressort 9 est suffisant pour repousser le bras 4 et faire tourner l'arbre 23 du moteur électrique 2 (non alimenté) via le train épicycloïdal réversible. Si le moteur électrique est resté en position inactive avec le bras 4 placé sur le trajet de retour du levier 8, les satellites peuvent tourner autour de leur axe et le porte-satellites 14 reste dans la position où il est repoussé par le ressort 15.

Lorsque le circuit électronique de régulation est en fonctionnement pour contrôler automatiquement la vitesse du véhicule, la pédale d'accélération et donc le câble 10 est relâché et le moteur électrique 2 est alimenté. Si l'arbre 23 du moteur tourne, il entraîne, via le planétaire 12, les satellites 13 et la couronne 11, le bras 4 en rotation pour amener le papillon 7 du moteur à la position correspondant à la vitesse de consigne du véhicule. Sous l'effet du couple de réaction résultant de l'application de l'effort FA sur la couronne 11, conséquence de la poussée mécanique du ressort 9 sur le levier 8 en appui sur le bras 4, le levier 14 est maintenu en butée contre l'axe 26 à l'encontre de la force de rappel du ressort 25 et actionne le poussoir 28 du contacteur 17 qui est relié au circuit électronique de régulation du véhicule et qui indique à celui-ci qu'il a effectivement pris en charge le contrôle de la vitesse du véhicule. Au cours des phases stationnaires de la régulation, l'arbre 23 ne tourne pas et le ressort 9 continue à appliquer le levier 8 sur le bras 4, le contacteur 17 étant maintenu dans le même état. Si le conducteur désire reprendre rapidement le contrôle de la vitesse de son véhicule pour effectuer un dépassement par exemple, il tire sur le câble 10 par l'intermédiaire de sa pédale d'accélérateur et le ressort 15 repousse le levier 14, ce qui ouvre (ou ferme si le contacteur 17 est placé de l'autre côté du poussoir 16) le contacteur 17 qui transmet au circuit électronique de régulation l'information indiquant que le conducteur a pris temporairementt le contrôle de la vitesse du véhicule.

La solution proposée pour le moteur 2 (dont le stator 35 et le rotor 36 apparaissent à la figure 6) dans le cadre de la présente invention est celle d'un moteur pas à pas classique qui est alimenté en courant électrique, soit en continu pour maintenir sa position, soit en impulsions pour avancer ou reculer pas à pas. Le couple de maintien du moteur lorsqu'il est alimenté est nettement supérieur au couple de rappel exercé sur la couronne 11 par le ressort 9.

Ce moteur 2 est en outre agencé pour que la coupure de son alimentation électrique, notamment pour placer le papillon du carburateur 7 sous le seul contrôle du conducteur, supprime les couples de retenue ou de freinage d'origine électrique agissant sur le moteur et permette ainsi un retour rapide du bras 4 à sa position d'origine sous l'effet du couple de rappel du ressort 9 qui n'a à vaincre que les frottements. L'utilisation du train planétaire permet ainsi de disposer d'un réducteur d'encombrement minimal et de frottement réduit avec un contacteur électrique fixe de meilleure fiabilité que les systèmes à contact mobile, notamment du fait qu'il peut être enfermé dans un boîtier étanche à l'abri de l'environnement extérieur.

Dans le mode de réalisation représenté sur les figures 6 à 8 et où les éléments identiques portent les mêmes numéros de référence que précédemment, le ressort de rappel hélicoïdal du porte-satellites est remplacé un ressort spiral 37 enroulé autour d'un prolongement 38 du porte-satellites 14 formé de deux plaques situées de part et d'autre des satellites 13a et 13b. Le ressort spiral 37 est en appui par l'une de ses extrémités en forme de crochet 39 sur l'axe 24a du pignon satellite 13a et donc en appui sur le porte-satellites 14. A son autre extrémité en forme de tige 40, le ressort 37 est en appui dans un logement 41 du corps 18. La couronne à denture intérieure 11 est reliée par des cannelures 22 au bras de commande 4.

Selon une particularité de ce mode de réalisation, l'une des plaques du porte-satellites 14 porte un doigt de butée et d'actionnement 42 visible sur les figures 7 et 8. Ce doigt 42 vient s'engager en service dans une lumière 43 ménagée dans une plaque de réglage 44 fixée rigidement mais de façon réglable en translation grâce à une lumière 44a par une vis de réglage 45 sur une face interne du flasque de sortie de moteur 46 (voir la figure 6). Un microcontacteur électrique 47 est fixé sur le flasque 46 à l'aide de goupilles élastiques dépassantes 48 qui servent également à guider longitudinalement la plaque de réglage 44. Le contacteur 47 comporte un poussoir 50 qui vient se placer en face et à proximité immédiate du doigt 42.

Avant la mise en service du dispositif d'actionnement représenté sur les figures 6 à 8, il est nécessaire de procéder à son réglage. A cet effet, comme on le voit sur les figures 7 et 8, un jeu (j) existe entre la lumière 43 et le doigt 42 et la plaque de réglage 44 doit être bloquée par la vis 45 dans une position telle que lorsque le doigt 42 parcourt ce jeu (j) à partir de la position d'actionnement à fond du contacteur 47 le poussoir 50 de celui-ci cesse d'être actionné.

Lorsque le moteur électrique 2 n'est pas sous tension, aucun couple n'est exercé sur le porte-satellites 14 et le ressort 37 actionne le poussoir du contacteur 47. Lorsque le dispositif d'actionnement est en service, comme dans le cas des figures 3 à 6, la réaction exercée sur la couronne 11 sous l'effet du ressort 9 s'exerce à l'encontre du couple de rappel du ressort 37 pour déplacer le porte-satellites 14 en rotation selon la flèche FR à la figure 7. Le doigt 42 entraîné par le porte-satellites 14 (voir la figure 8) parcourt alors le jeu (j) dans le sens FR et libère le poussoir 50 du contacteur 47. Le circuit électronique de régulation est alors informé par le contacteur 47 que le papillon 7 du carburateur est sous le contrôle du moteur électrique 2.

Si le conducteur reprend transitoirement le contrôle de l'accélérateur du véhicule, le couple de réaction dû au ressort 9 disparaît (voir figure 2b précédente) et le couple de rappel du ressort 37 s'exerce à nouveau dans la direction opposée à FR sur le porte-satellites 14 pour repousser par le doigt 42 le poussoir 50 du contacteur 47 qui indique au circuit électronique de régulation, soit qu'il doit garder en mémoire la position du rotor 36 du moteur d'actionnement pas à pas 2, soit que l'on vient de quitter une position de régulation de régime de ralenti.

Dès que le conducteur relâche son action sur la pédale d'accélérateur, le levier 8 revient, sous l'action du ressort 9 de rappel du papillon des gaz, s'appuyer brutalement sur le bras 4 qui repousse par l'intermédiaire du train épicycloïdal le porte-satellites 14 à l'encontre du ressort 37. Le doigt 42 parcourt le jeu (j) et vient en butée au fond de la lumière 43. Ce déplacement (j) est suffisant pour libérer le poussoir 50 du contacteur 47. Cette configuration a pour avantage que le poussoir 50 du contacteur 47 n'est pas soumis à des chocs lorsque le conducteur relâche la pédale d'accélérateur.

Si l'on souhaite néanmoins placer le contacteur 47 en position enfoncée du poussoir 50 lorsque le moteur 2 contrôle effectivement le papillon des gaz 7, selon le mode de réalisation représenté sur les figures 6 à 8, il suffit de placer ce contacteur 47 du côté opposé par rapport au doigt 42, c'est-à-dire à la place de la vis de réglage 45 qui vient, elle, se fixer sur le flasque 46 à la place du contacteur 47. Le poussoir 50 du contacteur 47 est alors disposé en face et à proximité immédiate du doigt 42 dont les déplacements sont toujours limités par les flancs de la lumière 43.

## Revendications

1. Dispositif d'actionnement électrique du papillon d'un moteur à combustion interne, notamment d'un véhicule automobile, comprenant un réducteur à engrenages (3), interposé entre un moteur électrique (2) et un bras de commande (4), un levier de commande (8) d'un papillon (7), des moyens de rappel (9) de ce levier de commande (8) vers une position de ralenti du papillon, ainsi qu'un contacteur électrique permettant de détecter si le bras de commande (4) contrôle effectivement le levier de commande (8) ou si celui-ci est placé sous le contrôle direct du conducteur du véhicule agissant mécaniquement sur une pédale d'accélérateur, caractérisé en ce que le réducteur à engrenages comporte un train planétaire dont l'engrenage planétaire (12) est solidaire en rotation de l'arbre (23) du moteur électrique (2), dont la couronne à denture intérieure (11) est reliée mécaniquement au bras de commande (4) et dont les axes de support des pignons satellites (13a, 13b) sont solidaires d'un porte-satellites (14), tandis que le porte-satellites (14) est monté oscillant entre deux positions et, d'une part, est sollicité élastiquement par un ressort de rappel (15, 37) vers une première position dans laquelle il place le contacteur électrique (17, 47) dans un premier état et, d'autre part, est placé dans une deuxième position dans laquelle il place le contacteur électrique (17, 47) dans un deuxième état, à l'encontre du ressort de rappel (15, 37) sous l'action des moyens de rappel (9) du levier de commande (8) lorsque celui-ci est contrôlé par le bras de commande (4).

2. Dispositif selon la revendication 1, caractérisé en ce que le porte-satellites (14) constitue un levier transversal qui est monté librement à rotation autour de l'axe (23) du moteur électrique (2) et qui porte les axes (24a, 24b) de support respectifs des pignons satellites (13a, 13b) qui engrènent simultanément avec la denture extérieure du planétaire (12) et avec la denture intérieure de la couronne (11) du train planétaire, et en ce que l'une des extrémités (27) du levier est susceptible de venir en contact avec un poussoir (28) du contacteur électrique (17) sous l'effet de la rotation du levier (14) tandis que l'autre extrémité (30) du levier (14) est en appui sur le ressort hélicoïdal de rappel (15).

3. Dispositif selon la revendication 2, caractérisé en ce que le ressort de rappel (15) est logé au moins partiellement dans un logement (34) du levier (14) et autour d'un axe (26) dont une extrémité constitue une butée limitant l'angle de rotation du porte-satellites (14).

4. Dispositif selon la revendication 3, caractérisé en ce que la position de l'extrémité de butée de l'axe (26) est réglable par rapport au fond du logement (34) afin de permettre de régler la course d'actionnement du contacteur électrique (17).

5. Dispositif selon la revendication 4, caractérisé en ce que l'extrémité (30) du levier transversal qui est en appui sur le ressort hélicoïdal de rappel (15) est placée avec jeu entre deux joues de butée (31, 32) solidaires du corps (18) du réducteur et qui font saillie sur une face de ce corps et en ce que le ressort de rappel (15) est en appui sur une première (32) de ces joues et sollicite une face de l'extrémité (30) du levier au contact de la deuxième joue (31), tandis que les moyens de rappel (9) du levier de commande (8) tendent à faire pivoter le levier en direction de la première joue (32) au contact de l'axe de butée (26).

6. Dispositif selon la revendication 1, caractérisé en ce que le porte-satellites (14) constitue un levier transversal qui est monté librement à rotation autour de l'axe du moteur électrique (2) et qui porte les axes (24a, 24b) de support respectifs des pignons satellites (13a, 13b) qui engrènent simultanément avec la denture extérieure du planétaire (12) et avec la denture intérieure de la couronne (11), en ce qu'un prolongement du levier transversal (14) porte un doigt d'actionnement (42) du contacteur électrique (47) tandis que l'un des axes (24a ou 24b) de supprot des satellites constitue un appui pour une extrémité du ressort de rappel (37) enroulé autour d'un prolongement (38) du porte-satellites et dont l'autre extrémité est encastrée et en ce que le doigt d'actionnement (42) est engagé avec un jeu (j) dans une lumière (43) d'une plaque de réglage (44) dont la position est réglable par rapport au contacteur (47) afin de positionner la course d'actionnement du poussoir (50) de celui-ci limitée audit jeu (j).

7. Dispositif selon la revendication 6, caractérisé en ce que le poussoir (50) du contacteur d'actionnement (47) est disposé à proximité immédiate du doigt d'actionnement (42) de manière que le contacteur (47) soit actionné lorsque le levier de commande (8) est contrôlé par le bras de commande (4).

8. Dispositif selon l'une des revendications 6 ou 7, caractérisé en ce que le contacteur électrique (47) est maintenu bloqué en position par la plaque de réglage (44) qui est elle-même bloquée par une vis de réglage (45).

9. Dispositif selon l'une des revendications 1 à 8, caractérisé en ce que le moteur électrique (2) d'actionnement du train planétaire (12, 13, 11) est un moteur pas à pas qui est alimenté en courant électrique, soit en continu pour maintenir sa position, soit en impulsions pour avancer ou reculer pas à pas.

**Patentansprüche**

1. Elektrische Vorrichtung zum Betätigen der Drosselklappe in einem Verbrennungsmotor, insbesondere eines Kraftfahrzeugs mit einem Untersetzungsgetriebe (3), das zwischen einem Elektromotor (2) und einem Steuerarm (4) angeordnet ist, mit einem Steuerhebel (8) für eine Drosselklappe (7), mit einer Rückholanordnung (9) für den Steuerhebel (8) in eine Verzögerungsstellung der Drosselklappe und mit einem elektrischen Schalter zur Feststellung, ob der Steuerarm (4) tatsächlich den Steuerhebel kontrolliert oder ob dieser unter der direkten Kontrolle des Fahrers steht, der mechanisch auf ein Gaspedal einwirkt, dadurch gekennzeichnet, dass das Untersetzungsgetriebe einen Planetenantrieb aufweist, dessen Planetenradsatz (12) drehfest mit der Welle (23) des Elektromotors (2) ist, dessen Hohlrad (11) mechanisch mit dem Steuerarm (4) verbunden ist und dessen Tragachsen für die Planetenräder (13a, 13b) fest mit einem Planetenradträger (14) verbunden sind, während der Planetenradträger (14) zwischen zwei Stellungen verschwenkbar angeordnet ist und einerseits elastisch von einer Rückholfeder (15, 37) in Richtung einer ersten Stellung beaufschlagt wird, in der er den elektrischen Schalter (17, 47) in einen ersten Zustand bringt und andererseits in eine zweite Stellung gebracht wird, in der er den elektrischen Schalter (17, 47) in einen zweiten Zustand bringt gegen die Wirkung der Rückholfeder (15, 37) und unter der Einwirkung einer Rückholanordnung (9) für den Steuerhebel (8) sofern dieser vom Steuerarm (4) kontrolliert wird.

2. Vorrichtung nach Anspruch 1, dadurch gekennzeichnet, dass der Satellitenträger (14) einen Querhebel bildet und frei drehbar um die Achse (23) des Elektromotors (2) angeordnet ist, wobei letzterer die Tragachsen (24a, 24b) der entsprechenden Planetenräder (13a, 13b) trägt, die gleichzeitig mit der Aussenverzahnung des Sonnenrades (12) kämmen und mit der Innenverzahnung des Hohlrades (11) des Planetenantriebs und dass eines der Enden (27) des Hebels einen Drücker (28) des elektrischen Schalters (17) berühren kann unter der Drehwirkung des Hebels (14) während das andere Ende (30) des Hebels (14) sich auf der schraubenförmigen Rückholfeder (15) abstützt.

3. Vorrichtung nach Anspruch 2, dadurch gekennzeichnet, dass die Rückholfeder (15) wenigstens teilweise in einer Aussparung (34) des Hebels (14) angeordnet ist und eine Achse (26) umgibt, deren eines Ende einen Anschlag bildet zur Begrenzung des Verdrehwinkels des Satellitenträgers (14).

4. Vorrichtung nach Anspruch 3, dadurch gekennzeichnet, dass die Stellung des Anschlagendes der Achse (26) bezüglich des Bodens der Aussparung (34) einstellbar ist um so den Betätigungsweg des elektrischen Schalters (17) zu regeln.

5. Vorrichtung nach Anspruch 4, dadurch gekennzeichnet, dass das Ende (30) des Querhebels, der sich auf der schraubenförmigen Rückholfeder (15) abstützt mit Spiel zwischen zwei Anschlagbacken (31, 32) angeordnet ist, die am Gehäuse (18) des Untersetzungsgetriebes vorgesehen sind und von einer Fläche dieses Gehäuses vorspringen und dass die Rückholfeder (15) sich auf einer ersten (32) dieser Backen abstützt und eine Fläche des Endes (30) des Hebels in Berührung mit der zweiten Backe (31) beaufschlagt, während die Rückholanordnung (9) des Steuerhebels (8) dazu neigt, den Hebel in Richtung der ersten Backe (32) bei Berührung der Anschlagachse (26) zu verschwenken.

6. Vorrichtung nach Anspruch 1, dadurch gekennzeichnet, dass der Satellitenträger (14) einen Querhebel bildet, der frei drehbar um die Achse des Elektromotors (2) angeordnet ist und die Tragachsen (24a, 24b) der entsprechenden Planetenräder (13a, 13b) trägt, die gleichzeitig mit der Aussenverzahnung des Sonnenrades (12) und mit der Innenverzahnung des Hohlrades (11) kämmen, dass eine Verlängerung des Querhebels (14) einen Betätigungsfinger (42) für den elektrischen Schalter (47) trägt, während eine der Tragachsen (24a oder 24b) für die Satellitenräder eine Stütze bildet für ein Ende der Rückholfeder (37), die um eine Verlängerung (38) des Planetenradträgers gewickelt ist und deren anderes Ende eingespannt ist und dass der Betätigungsfinger (42) mit Spiel (j) in eine Aussparung (43) einer Regelungsplatte (44) eingreift, deren Stellung regelbar ist bezüglich des Schalters (47), um so den Betätigungsweg des Drückers (50) bezüglich desjenigen durch das Spiel (j) beschränkten einzustellen.

7. Vorrichtung nach Anspruch 6, dadurch gekennzeichnet, dass der Drücker (50) des Betätigungsschalters (47) in unmittelbarer Nähe des Betätigungsfingers (42) derart angeordnet ist, dass der Schalter (47) betätigt wird, wenn der Steuerhebel (8) vom Steuerarm kontrolliert wird.

8. Vorrichtung nach einem der Ansprüche 6 oder 7, dadurch gekennzeichnet, dass der elektrische Schalter (47) durch die Regelungsplatte (44) in Blockierstellung gehalten wird, die wiederum durch einen Regelschraube (45) blockiert wird.

9. Vorrichtung nach einem der Ansprüche 1 bis 8, dadurch gekennzeichnet, dass der Elektromotor (2) zur Betätigung des Planetenantriebs (12, 13, 11) ein Schrittmotor ist, der mit elektrischem Strom versorgt wird entweder kontinuierlich zur Aufrechterhaltung seiner Stellung oder impulsförmig, um schrittweise vor- oder zurückzuschreiten.

**Claims**

1. Apparatus for electrical actuation of the butterfly throttle valve of an internal combustion engine, in particular of a motor vehicle, comprising a gear reducing unit (3) interposed between an electric motor (2) and a control arm (4), a control lever (8) of a throttle valve (7), return means (9) for returning said control lever (8) towards an idle position of the throttle valve, and an electrical switch making it possible to detect if the control arm (4) is actually controlling the control lever (8) or if the latter is under the direct control of the driver of the vehicle acting mechanically on an accelerator pedal, characterised in that the gear-reducing unit comprises a planetary train in which the sun gear (12) is fixed for rotary movement with the shaft (23) of the electric motor (2), the internally toothed ring (11) is mechanically connected to the control arm (4) and the support spindles of the planet pinions (13a, 13b) are fixed with respect to a planet wheel carrier (14) while the planet wheel carrier (14) is mounted for oscillating movement between two positions and on the one hand is urged resiliently by a return spring (15, 37) towards a first position in which it places the electrical switch (17, 47) in a first state and on the other hand is placed in a second position in which it puts the electrical switch (17, 47) in a second state, against the force of the return spring (15, 37) under the action of the return means (9) of the control lever (8) when the latter is controlled by the control arm (4).

2. Apparatus according to Claim 1, characterised in that the planet wheel carrier (14) forms a transverse lever which is mounted freely for rotary movement about the shaft (23) of the electric motor (2) and which carries the respective support spindles (24a, 24b) of the planet pinions (13a, 13b) which simultaneously mesh with the external teeth of the sun wheel (12) and with the internal teeth of the ring (11) of the planetary train, and that one of the ends (27) of the lever is capable of coming into contact with a push rod (28) of the electrical switch (17) under the effect of the rotary movement of the lever (14) while the other end (30) of the lever (14) bears against the coil return spring (15).

3. Apparatus according to Claim 2, characterised in that the return spring (15) is at least partially housed in a housing (34) of the lever (14) and about a shaft (26) of which an end forms an abutment for limiting the angle of rotary movement of the planet wheel carrier (14).

4. Apparatus according to Claim 3, characterised in that the position of the abutment end of the shaft (26) is adjustable with respect to the bottom of the housing (34) to make it possible to adjust the actuating travel of the electrical switch (17).

5. Apparatus according to Claim 4, characterised in that the end (30) of the transverse lever which bears against the coil return spring (15) is placed with clearance between two side abutment members (31, 32) which are fixed with respect to the body (18) of the reducing unit and which project from a face of said body and that the return spring (15) bears against a first one (32) of said side members and urges a face of the end (30) of the lever into contact with the second side member (31) while the return means (9) of the control lever (8) tend to cause the lever to pivot in the direction of the first side member (32) into contact with the abutment shaft (26).

6. Apparatus according to Claim 1, characterised in that the planet wheel carrier (14) forms a transverse lever which is mounted freely rotatably about the shaft of the electric motor (2) and which carries the respective support spindles (24a, 24b) of the planet pinions (13a, 13b) which simultaneously mesh with the external teeth of the sun gear (12) and with the internal teeth of the ring (11), that an extension portion of the transverse lever (14) carries an actuating finger (42) of the electrical switch (47) while one of the support spindles (24a or 24b) of the planet wheels forms a support means for an end of the return spring (37) which is wound around an extension portion (38) of the planet wheel carrier and the other end of which is fixed and that the actuating finger (42) is engaged with a clearance (j) in an opening (43) in a regulating plate (44) which is adjustable in position with respect to the switch (47) in order to position the actuating travel of the push rod (50) of the switch, which is limited to said clearance (j).

7. Apparatus according to Claim 6, characterised in that the push rod (50) of the actuating switch (47) is disposed in the immediate vicinity of the actuating finger (42) so that the switch (47) is actuated when the control lever (8) is controlled by the control arm (4).

8. Apparatus according to one of Claims 6 or 7, characterised in that the electrical switch (47) is held locked in position by the regulating plate (44) which is itself locked by an adjusting screw (45).

9. Apparatus according to one of Claims 1 to 8, characterised in that the electric motor (2) for actuating the planetary train (12, 13, 11) is a stepping motor which is supplied with electrical current either continuously to maintain its position or in pulses for forward or reverse stepping movement.

FIG.1

FIG.2a

FIG.2b

FIG.3

FIG 4

FIG.5

FIG.6

FIG.7

FIG.8